# EUROPEAN PATENT SPECIFICATION

(11) **EP 3 741 539 B1**
(45) Date of publication and mention of the grant of the patent: **01.12.2021**
(21) Application number: 18901768.4
(22) Date of filing: 14.11.2018
(51) Int. Cl.: B29C 45/76, B29C 45/84, G06F 21/62

(54) **INJECTION MOLDING MACHINE**
SPRITZGIESSMASCHINE
MACHINE DE MOULAGE PAR INJECTION

(30) Priority: 16.01.2018 JP 2018004996
(43) Date of publication of application: 25.11.2020
(73) Proprietor: Sumitomo Heavy Industries, Ltd., Tokyo 141-6025 (JP)
(72) Inventor: ARITA, Mikio, Chiba 263-0001 (JP); MOGI, Hiroshi, Kanagawa 237-8555 (JP)
(74) Representative: Louis Pöhlau Lohrentz
(86) International application number: PCT/JP2018/042166
(87) International publication number: WO 2019/142472

(56) References cited:
- JP-A- H05 269 816
- JP-A- H11 245 273
- JP-A- S62 163 106
- JP-A- 2009 166 464
- JP-A- 2009 292 065
- JP-A- 2012 135 949
- JP-A- 2016 021 119
- US-A1- 2016 011 582
- US-A1- 2016 236 392

## Description

### Technical Field

The present invention relates to an injection molding machine.

### Background Art

For example, an injection molding machine that includes a controller and various drive units, such as a mold clamping unit, controls various drive units according to molding conditions or the like set by the controller, and produces a molding product is known (for example, EP3199322 A1, US 2016/011582 A1 or the like).

### Summary of Invention

### Technical Problem

However, for example, an abnormality may occur in a processing operation of the controller or the like. For this reason, for example, in a case where such an abnormality occurs, even though a user reactivates the injection molding machine as usual, there is a possibility that processing corresponding to an original function of the injection molding machine, such as processing relating to control for producing a molding product according to the molding conditions, is executed with priority. That is, there is a possibility that the user cannot execute various kinds of processing of returning the injection molding machine in an abnormal state to a normal state, such as diagnosis processing or maintenance processing having relatively low priority.

Accordingly, in view of the above-described problem, an object of the invention is to provide an injection molding machine capable of appropriately returning the injection molding machine to a normal state in a case where an abnormality relating to an internal processing operation occurs.

### Solution to Problem

In order to achieve the above-described object, an embodiment of the invention provides an injection molding machine including:
a mold clamping unit configured to clamp a mold unit;
an injection unit configured to fill the mold unit clamped by the mold clamping unit with a molding material; and
an ejector unit configured to eject a molding product from the mold unit after the molding material filled by the injection unit is cooled and solidified,
wherein the injection molding machine is configured to be activated in a usual activation mode or in a restricted activation mode where a part of functions is restricted with respect to a case where the injection molding machine is activated in the usual activation mode, and
the injection molding machine is configured to be activated in the restricted activation mode in a state in which a diagnosis function relating to diagnosis of the injection molding machine or a maintenance function relating to maintenance of the injection molding machine or a communication function with an outside of the injection molding machine are valid.

### Advantageous Effects of Invention

According to the above-described embodiment, it is possible to provide an injection molding machine capable of appropriately returning the injection molding machine to a normal state in a case where an abnormality relating to an internal processing operation occurs.

### Brief Description of Drawings

Fig. 1 is a diagram showing an example of the configuration of an injection molding system including an injection molding machine.
Fig. 2 is a diagram showing an example of the configuration of the injection molding system including the injection molding machine.
Fig. 3 is a functional block diagram showing an example of the functional configuration of a controller.
Fig. 4 is a diagram showing an example of a usual operation screen relating to maintenance processing.
Fig. 5 is a diagram showing an example of an operation screen of retrial processing for maintenance processing.
Fig. 6 is a diagram showing another example of an operation screen of retrial processing for maintenance processing.
Fig. 7 is a diagram showing still another example of operation screen of retrial processing for maintenance processing.
Fig. 8 is a flowchart schematically showing an example of processing in the controller at the time of activation of the injection molding machine.
Fig. 9 is a flowchart schematically showing another example of processing in the controller at the time of activation of the injection molding machine.
Fig. 10 is a flowchart schematically showing still another example of processing in the controller at the time of activation of the injection molding machine.
Fig. 11A is a diagram illustrating a specific example of an abnormality to be a target of normal return processing.
Fig. 11B is a diagram illustrating a specific example of an abnormality to be a target of the normal return processing.
Fig. 12 is a timing chart showing a specific example of the operation of the injection molding machine relating to a restricted activation mode.

### Description of Embodiments

Hereinafter, a mode for carrying out the invention will be described referring to the drawings.

In the drawings, the same or corresponding configurations are represented by the same or corresponding reference numerals, and description will not be repeated.

### [Outline of Injection Molding System]

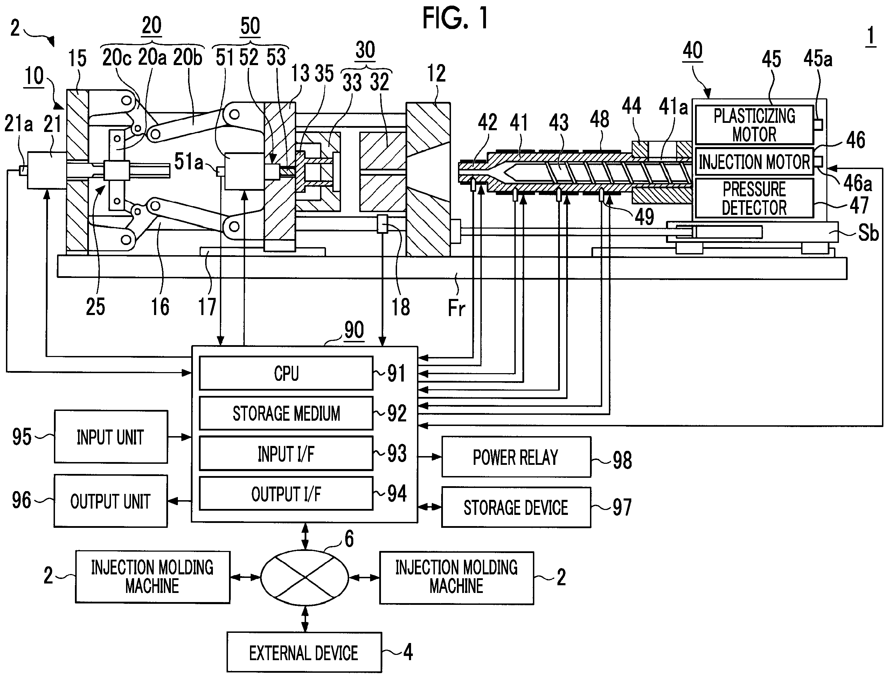

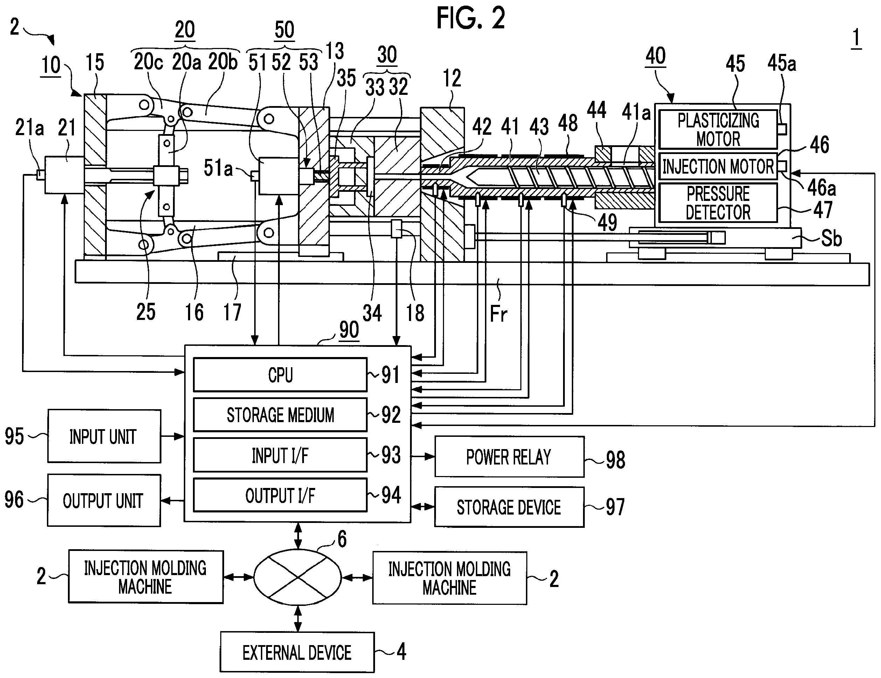

First, the outline of an injection molding system 1 including an injection molding machine 2 will be described referring to Figs. 1 and 2.

Figs. 1 and 2 are diagrams showing an example of the configuration of the injection molding system 1 including the injection molding machine 2 according to the embodiment. Specifically, Fig. 1 shows a state at the time of completion of mold opening of the injection molding machine 2, and Fig. 2 shows a state at the time of mold clamping of the injection molding machine 2.

The injection molding system 1 includes a plurality of injection molding machines 2, an external device 4, and a communication network 6.

All of a plurality of injection molding machines 2 have the same configuration. For this reason, in Figs. 1 and 2, only the detailed configuration of one injection molding machine 2 among a plurality of injection molding machines 2 is shown.

A plurality of injection molding machines 2 are connected to one another in a bidirectionally communicable manner through the communication network 6. With this, one injection molding machine 2 can acquire various kinds of information, for example, information relating to various settings or information relating to maintenance, such as a program for update, from other injection molding machines 2. For example, one injection molding machine 2 can receive an operation input to the one injection molding machine 2, that is, a remote operation from other injection molding machines 2. Hereinafter, an operation input that is input from the input unit 95 to the controller 90 and an operation input that is input the controller 90 by way of the communication network 6 may be referred to as a "direct operation input" and a "remote operation input" for convenience, respectively. The direct operation input and the remote operation input may be generally referred as an "external operation input".

A plurality of injection molding machines 2 may be connected to one another in a bidirectionally communicable manner, for example, by a daisy-chain system or the like without passing through the communication network 6.

Each of a plurality of injection molding machines 2 is connected to the external device 4 in a communicable manner through the communication network 6. With this, each of the injection molding machines 2 can acquire various kinds of information, for example, information relating to various settings or information relating to maintenance, such as a program for update, from the external device 4. For example, each of the injection molding machines 2 can receive an operation input to the injection molding machine 2, that is, a remote operation from the external device 4.

The external device 4 is connected to a plurality of injection molding machines 2 in a communicable manner through the communication network 6, and manages each of the injection molding machines 2. The external device 4 is, for example, a management terminal that manages operation states or the like of a plurality of injection molding machine 2 in a factory. The external device 4 is, for example, a management server that is provided outside a factory where the injection molding machines 2 are disposed and manages a plurality of injection molding machines 2 disposed in one factory or distributed in a plurality of factories. In this case, the management server may be a company server that is operated by a company, which owns the injection molding machines 2, or may be a cloud server that is used by the company.

The communication network 6 includes, for example, an internal local area network (LAN) of a factory or the like where the injection molding machines 2 are provided. The communication network 6 may include, for example, a wide area network (WAN) passing through a mobile phone network or an Internet network.

### [Hardware Configuration of Injection Molding Machine]

Next, the specific hardware configuration of the injection molding machine 2 will be continuously described referring to Figs. 1 and 2.

The injection molding machine 2 includes a frame Fr, a mold clamping unit 10, an injection unit 40, an ejector unit 50, a controller 90, an input unit 95, and an output unit 96.

First, the mold clamping unit 10 and the ejector unit 50 will be described. Hereinafter, in the description of the mold clamping unit 10 and the like, a movement direction (in Figs. 1 and 2, a right direction) of a movable platen 13 at the time of mold closing is a front side, and a movement direction (in Figs. 1 and 2, a left direction) of the movable platen 13 at the time of mold opening is a rear side.

The mold clamping unit 10 (an example of a drive unit) performs mold closing, mold clamping, and mold opening of a mold unit 30. The mold clamping unit 10 includes a stationary platen 12, a movable platen 13, a support platen 15, a tie bar 16, a toggle mechanism 20, a mold clamping motor 21, and a motion conversion mechanism 25.

The stationary platen 12 is fixed to the frame Fr. A stationary mold 32 is attached to a surface of the stationary platen 12 facing the movable platen 13.

The movable platen 13 is movable along a guide mechanism (for example, a guide rail) 17 placed on the frame Fr, and specifically, is movable forward and rearward with respect to the stationary platen 12. A movable mold 33 is attached to a surface of the movable platen 13 facing the stationary platen 12.

The movable platen 13 is moved forward and rearward with respect to the stationary platen 12, whereby mold closing, mold clamping, and mold opening are performed. The mold unit 30 is constituted of the stationary mold 32 and the movable mold 33.

The support platen 15 is connected to the stationary platen 12 with a gap and is placed on the frame Fr to be movable in the mold opening and closing directions. The support platen 15 may be movable along a predetermined guide mechanism placed on the frame Fr. In this case, the guide mechanism of the support platen 15 may be in common with the guide mechanism 17 of the movable platen 13 described above.

In the embodiment, although the stationary platen 12 is fixed to the frame Fr, and the support platen 15 is movable in the mold opening and closing directions with respect to the frame Fr, the support platen 15 may be fixed to the frame Fr, and the stationary platen 12 may be movable in the mold opening and closing directions with respect to the frame Fr.

The tie bar 16 connects the stationary platen 12 and the support platen 15 with a gap. The number of tie bars 16 may be plural. Each tie bar 16 is parallel to the mold opening and closing directions, and extends according to mold clamping force. At least one tie bar 16 is provided with a mold clamping force detector 18. The mold clamping force detector 18 is, for example, a strain gauge type detector that detects mold clamping force by detecting strain of the tie bar 16, and a signal indicating a detection result is loaded into the controller 90.

The mold clamping force detector 18 is not limited to the strain gauge type detector, and may be a piezoelectric type detector, a capacitance type detector, a hydraulic type detector, an electromagnetic type detector, or the like. An attachment position of the mold clamping force detector 18 is not limited to the tie bar 16.

The toggle mechanism 20 moves the movable platen 13 with respect to the stationary platen 12. The toggle mechanism 20 is disposed between the movable platen 13 and the support platen 15. The toggle mechanism 20 is constituted of a crosshead 20a, a pair of link groups, and the like. Each link group has a plurality of links 20b and 20c that are connected to be bendable and stretchable by a pin or the like. One link 20b is oscillatingly attached to the movable platen 13, and the other link 20c is oscillatingly attached to the support platen 15. When the crosshead 20a is moved forward and rearward, a plurality of links 20b and 20c are bent and stretched, and the movable platen 13 is moved forward and rearward with respect to the support platen 15.

The mold clamping motor 21 is attached to the support platen 15, and operates the toggle mechanism 20. The mold clamping motor 21 moves the crosshead 20a forward and rearward. Accordingly, the links 20b and 20c are bent and stretched, and the movable platen 13 is moved forward and rearward.

The motion conversion mechanism 25 converts rotary motion of the mold clamping motor 21 into linear motion and transmits the linear motion to the crosshead 20a. The motion conversion mechanism 25 is constituted of, for example, a ball screw mechanism or the like.

The operation of the mold clamping unit 10 is controlled by the controller 90. The controller 90 controls the operation of the mold clamping unit 10, for example, in a mold closing process, a mold clamping process, a mold opening process, and the like.

In the mold closing process, the controller 90 drives the mold clamping motor 21 to move the crosshead 20a forward at a set speed. Accordingly, the movable platen 13 is moved forward, and the movable mold 33 is brought into contact with the stationary mold 32. A position or a speed of the crosshead 20a is detected by, for example, an encoder 21a of the mold clamping motor 21, or the like. A signal indicating a detection result is loaded into the controller 90.

In the mold clamping process, the controller 90 further drives the mold clamping motor 21 to further move the crosshead 20a forward to a set position, thereby generating mold clamping force. A cavity space 34 is formed between the movable mold 33 and the stationary mold 32 during mold clamping, and the cavity space 34 is filled with a liquid molding material. The filled molding material is solidified, whereby a molding product is obtained (produced). The number of cavity spaces 34 may be plural, and in this case, a plurality of molding products are simultaneously obtained (produced).

In the mold opening process, the controller 90 drives the mold clamping motor 21 to move the crosshead 20a rearward at a set speed. Accordingly, the movable platen 13 is moved rearward, and the movable mold 33 is separated from the stationary mold 32.

In the embodiment, although the mold clamping unit 10 has the mold clamping motor 21 as a drive source, the mold clamping unit 10 may have other power sources, for example, a hydraulic cylinder, instead of or in addition to the mold clamping motor 21. For example, the mold clamping unit 10 may have a linear motor as a driving force source for mold opening and closing, and may have an electromagnet as a driving force source for mold clamping.

In the embodiment, although the mold clamping unit 10 is a horizontal type mold clamping unit in which the mold opening and closing directions are a horizontal direction, the mold clamping unit 10 may be a vertical type mold clamping unit in which the mold opening and closing directions are a vertical direction.

The ejector unit 50 (an example of a drive unit) ejects the molding product from the mold unit 30. The ejector unit 50 has an ejector motor 51, a motion conversion mechanism 52, and an ejector rod 53.

The ejector motor 51 is attached to the movable platen 13. Although the ejector motor 51 is connected to the motion conversion mechanism 52, the ejector motor 51 may be connected to the motion conversion mechanism 52 through a belt, a pulley, or the like.

The motion conversion mechanism 52 converts rotary motion of the ejector motor 51 into linear motion of the ejector rod 53. The motion conversion mechanism 52 is constituted of, for example, a ball screw mechanism or the like.

The ejector rod 53 is movable forward and rearward in a through-hole of the movable platen 13. A front end portion of the ejector rod 53 is brought into contact with a movable member 35 that is disposed in the movable mold 33 to be movable forward and rearward. The ejector rod 53 may be connected to the movable member 35.

The operation of the ejector unit 50 is controlled by the controller 90. The controller 90 controls the operation of the ejector unit 50 in an ejection process or the like.

In the ejection process, the controller 90 drives the ejector motor 51 to move the ejector rod 53 forward. Accordingly, the movable member 35 is moved forward, and the molding product is ejected. Thereafter, the controller 90 drives the ejector motor 51 to move the ejector rod 53 rearward, thereby moving the movable member 35 rearward to an original position. A position or a speed of the ejector rod 53 is detected by, for example, an encoder 51a of the ejector motor 51. A signal indicating a detection result is sent to the controller 90.

Subsequently, the injection unit 40 will be described. In the description of the injection unit 40, unlike the description of the mold clamping unit 10, a movement direction (in Figs. 1 and 2, the left direction) of a screw 43 during filling is a front side, and a movement direction (in Figs. 1 and 2, the right direction) of the screw 43 during plasticizing is a rear side.

The injection unit 40 (an example of a drive unit) is provided in a slide base Sb that is movable forward and rearward with respect to the frame Fr, and is movable forward and rearward with respect to the mold unit 30. The injection unit 40 touches the mold unit 30, and fills the mold unit 30 with the molding material.

The injection unit 40 has, for example, a cylinder 41, a nozzle 42, a screw 43, a cooler 44, a plasticizing motor 45, an injection motor 46, a pressure detector 47, a heater 48, and a temperature measurer 49.

The cylinder 41 heats the molding material fed from a feed port 41a into the cylinder 41. The feed port 41a is formed in a rear portion of the cylinder 41. The cooler 44, such as a water cooling cylinder, is provided on the outer periphery of the rear portion of the cylinder 41. In front of the cooler 44, the heater 48, such as a band heater, and the temperature measurer 49 are provided on the outer periphery of the cylinder 41.

The cylinder 41 is divided into a plurality of zones in an axial direction (that is, a right-left direction in Figs. 1 and 2). The heater 48 and the temperature measurer 49 are provided in each zone of the cylinder 41. The controller 90 performs control on the heater 48 such that a measured temperature of the temperature measurer 49 becomes a set temperature for each zone.

The nozzle 42 is provided in a front end portion of the cylinder 41, and is pressed to the mold unit 30. The heater 48 and the temperature measurer 49 are provided on an outer periphery of the nozzle 42. The controller 90 performs control on the heater 48 such that a measured temperature of the nozzle 42 becomes a set temperature.

The screw 43 is disposed in the cylinder 41 to be rotatable and movable forward and rearward.

The plasticizing motor 45 sends the molding material to the front side along a helical groove of the screw 43 by rotating the screw 43. The molding material is gradually melted by heat from the cylinder 41 while being sent to the front side. As the liquid molding material is sent to the front side the screw 43 and is accumulated in a front portion of the cylinder 41, the screw 43 is moved rearward.

The injection motor 46 moves the screw 43 forward and rearward. The injection motor 46 injects the liquid molding material accumulated in front of the screw 43 from the cylinder 41 and fills the mold unit 30 with the liquid molding material by moving the screw 43 forward. Thereafter, the injection motor 46 presses the screw 43 to the front side and applies pressure to the molding material in the mold unit 30. With this, a shortage of the molding material can be supplemented. A motion conversion mechanism that converts rotary motion of the injection motor 46 into linear motion of the screw 43 is provided between the injection motor 46 and the screw 43. The motion conversion mechanism is constituted of, for example, a ball screw mechanism or the like.

The pressure detector 47 is disposed, for example, between the injection motor 46 and the screw 43, and detects pressure by the screw 43 from the molding material, back pressure with respect to the screw 43, and the like. The pressure received by the screw 43 from the molding material corresponds to pressure applied from the screw 43 to the molding material. A signal indicating a detection result of the pressure detector 47 is loaded into the controller 90.

The operation of the injection unit 40 is controlled by the controller 90. The controller 90 controls the operation of the injection unit 40 in a filling process, a holding pressure process, a plasticizing process, and the like.

In the filling process, the controller 90 drives the injection motor 46 to move the screw 43 forward at a set speed and fills the mold unit 30 with the liquid molding material accumulated in front of the screw 43. A position or a speed of the screw 43 is detected by, for example, an encoder 46a of the injection motor 46. A signal indicating a detection result is loaded into the controller 90. When the position of the screw 43 reaches a set position, switching (so-called V/P switching) from the filling process to the holding pressure process is performed. A set speed of the screw 43 may be changed according to the position of the screw 43, a time, or the like.

In the filling process, after the position of the screw 43 reaches the set position, the screw 43 may be temporarily stopped at the set position, and subsequently, V/P switching may be performed. Immediately before V/P switching, instead of the screw 43 being stopped, the screw 43 may be moved forward or may be moved rearward at a very slow speed.

In the holding pressure process, the controller 90 drives the injection motor 46 to press the screw 43 forward at a setting pressure and to apply pressure to the molding material in the mold unit 30. With this, a shortage of the molding material can be supplemented. The pressure of the molding material is detected by, for example, the pressure detector 47. A signal indicating a detection result is loaded into the controller 90.

In the holding pressure process, the molding material in the mold unit 30 is gradually cooled, and when the holding pressure process is completed, an inlet of the cavity space 34 is closed with a solidified molding material. This state is referred to as a gate seal, and with this, a backflow of the molding material from the cavity space 34 is restrained. After the holding pressure process, a cooling process is started. In the cooling process, solidification of the molding material in the cavity space 34 is performed. In order to shorten a molding cycle, the plasticizing process may be performed during the cooling process.

In the plasticizing process, the controller 90 drives the plasticizing motor 45 to rotate the screw 43 at a set rotation speed and to send the molding material forward along the helical groove of the screw 43. As a result, the molding material is gradually melted. As the liquid molding material is sent in front of the screw 43 and is accumulated in the front portion of the cylinder 41, the screw 43 is moved rearward. The rotation speed of the screw 43 is detected by, for example, an encoder 45a of the plasticizing motor 45. A signal indicating a detection result is loaded into the controller 90.

In the plasticizing process, in order to restrict abrupt rearward movement of the screw 43, the controller 90 may drive the injection motor 46 to apply set back pressure to the screw 43. The back pressure with respect to the screw 43 is detected by, for example, the pressure detector 47. A signal indicating a detection result is loaded into the controller 90. When the screw 43 is moved rearward to a set position and a predetermined amount of the molding material is accumulated in front of the screw 43, the plasticizing process ends.

Although the injection unit 40 of the embodiment is an inline and screw type injection unit, the injection unit may be a preplasticizing type injection unit. The preplasticizing type injection unit supplies the molding material melted in a plasticizing cylinder to an injection cylinder and injects the molding material from the injection cylinder into the mold unit. A screw is disposed in the plasticizing cylinder to be rotatable or rotatable and movable forward and rearward, and a plunger is disposed in the injection cylinder to be movable forward and rearward.

The controller 90 performs various kinds of control relating to the injection molding machine 2. For example, the controller 90 is primarily constituted of a computer having a central processing unit (CPU) 91, a storage medium 92, for example, a main storage device, such as a random access memory (RAM), a nonvolatile auxiliary storage device, such as a read only memory (ROM), an input interface 93, and an output interface 94. The controller 90 implements various functions, for example, by causing the CPU 91 to execute various programs stored in the storage medium 92. The controller 90 receives various external signals, such as a control signal and an information signal, through the input interface 93 and transmits various signals, such as a control signal and an information signal to the outside through the output interface 94.

The input unit 95 allows a user to perform various operation inputs on the injection molding machine 2 and transmits an operation signal according to a user's operation input to the controller 90. The input unit 95 may be, for example, operation means by hardware including switches, such as buttons, levers, or toggles, a keyboard, or the like or may be operation means by software including button icons on an operation screen displayed on the output unit 96 described below. The input unit 95 may use, for example, a touch panel in order to implement operation means by software. In this case, the output unit 96 described below may include, for example, a touch panel type display, and may also be used as (a part of) the input unit 95. The input unit 95 includes an activation switch 95a for activating the injection molding machine 2.

The output unit 96 (an example of a display unit) displays various kinds of information under the control of the controller 90 (specifically, a display processing unit 903 described below) . Specifically, the output unit 96 may display various information images according to an external operation input that is input to the controller 90 through the input unit 95. The output unit 96 may display various information images according to an external operation input that is input to the controller 90 through the communication network 6, that is, a remote operation.

For example, the output unit 96 displays information relating to an operation situation of the injection molding machine.

For example, the output unit 96 displays information (that is, information relating to set states) relating to present states of various settings in the injection molding machine.

For example, the output unit 96 displays an operation screen on which the user performs various operations relating to the injection molding machine 2. In this case, a plurality of operation screens may be prepared and displayed on the output unit 96 according to operation targets, operation contents, or the like, or the operation screens may be switched and displayed or may be displayed in a superimposed manner.

The storage device 97 includes a predetermined storage medium. The storage device 97 is connected to the controller 90 in a communicable manner, and transmits predetermined information stored in the storage medium to the controller 90, for example, according to a control signal from the controller 90 or spontaneously. For example, information relating to maintenance, such as a program for update relating to various functions of the injection molding machine 2 implemented by the controller 90, may be saved in the storage device 97 and may be suitably read to the controller 90.

The storage device 97 may be, for example, a storage device that is attachable to and detachable from the injection molding machine 2 (controller 90), such as a USB memory or a DVD drive into which a DVD medium as a storage medium is inserted. The storage device 97 may be, for example, a storage device to and from which an internal storage medium is attachable and detachable, such as a DVD drive.

The power relay 98 is provided between a drive unit (hereinafter, simply referred to as a "drive unit of the injection molding machine 2") that is driven to produce the molding product, such as the mold clamping unit 10, the injection unit 40, and the ejector unit 50 described above, and a predetermined commercial power supply. The power relay 98 is turned off in a stopped state of the injection molding machine 2. Then, usually (specifically, in a usual activation mode described below), the power relay 98 is turned on when the injection molding machine 2 is activated, and the drive unit of the injection molding machine 2 is activated. That is, the power relay 98 implements a function (hereinafter, referred to as a "drive function" for convenience) of activating the drive unit of the injection molding machine 2.

For example, the user performs various settings by operating the input unit 95 while viewing the operation screen displayed on the output unit 96. A user's setting (specifically, a new setting or a setting not kept as heretofore) is stored in the storage medium 92 and is read as needed.

### [Functional Configuration of Injection Molding Machine]

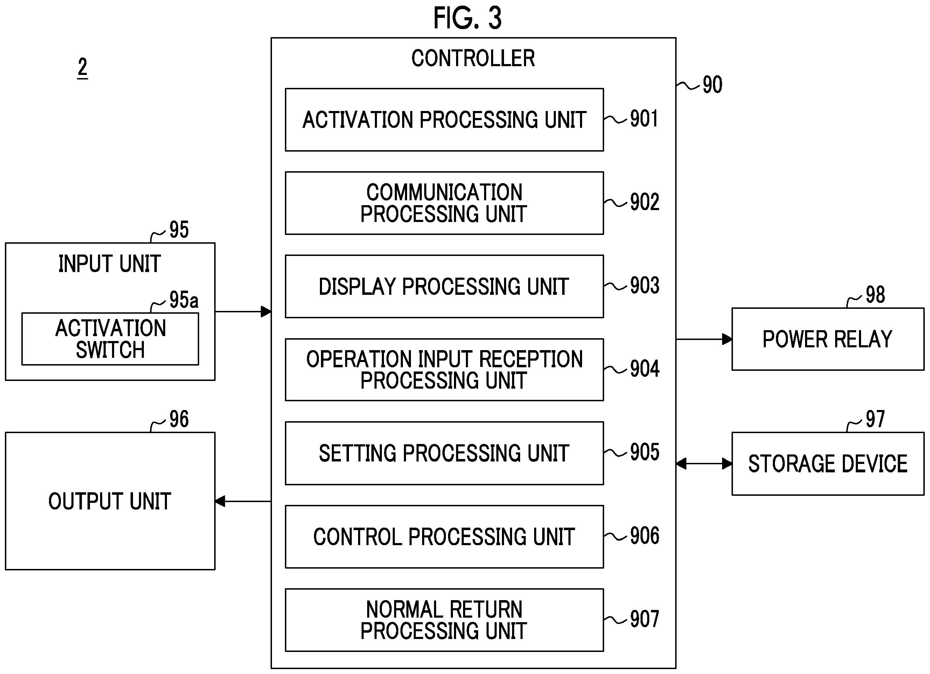

Next, the specific functional configuration of the injection molding machine 2 (the controller 90) will be described referring to Fig. 3 in addition to Figs. 1 and 2.

Fig. 3 is a functional block diagram schematically showing an example of the functional configuration of the controller 90 (described below) that is mounted in the injection molding machine 2.

The controller 90 includes activation processing unit 901, a communication processing unit 902, a display processing unit 903, an operation input receiving unit 904, a setting processing unit 905, a control processing unit 906, and a normal return processing unit 907 as functional units implemented by causing the CPU 91 to execute various programs stored in the storage medium 92.

The activation processing unit 901 activates the injection molding machine 2 in the stopped state according to a user's activation operation, that is, an operation (hereinafter, referred to as a "direct activation operation" for convenience) on the activation switch 95a. The activation processing unit 901 may activate the injection molding machine 2 according to a predetermined operation input (hereinafter, referred to as a "remote activation operation input" for convenience) that is input to the controller 90 through the communication network 6 and corresponds to the activation operation.

For example, the function of the activation processing unit 901 can be implemented by a program of a basic input/output system (BIOS) incorporated into the ROM of the controller 90, a flash memory, or the like. More specifically, in a case where the operation input corresponding to the user's direct activation operation or the remote activation operation by way of the communication network 6 is input to the controller 90, power supply to the controller 90 is started, and the function of the activation processing unit 901 is activated with the start of power supply to the controller 90.

The injection molding machine 2 has a plurality of activation modes. For example, a real time operating system (OS) that runs on the CPU 91 of the controller 90 has a plurality of activation modes. Then, the activation processing unit 901 activates the real time OS in any one activation mode among a plurality of activation modes. With this, an operation specification and the like of an application program and the like that run on the real time OS and correspond to various functions of the injection molding machine 2 can be made different for each activation mode. In other words, a part of various functions of the injection molding machine 2 that are implemented by the controller 90 can be restricted depending on a selected activation mode. For example, the activation processing unit 901 may maintain the may power relay 98 to be turned off in a case of activating the injection molding machine 2 in a specific activation mode (for example, a restricted activation mode described below) . With this, the controller 90 can restrain the activation of the drive unit of the injection molding machine 2, for example, in a specific activation mode where a molding product does not need to be produced. That is, the drive function of the injection molding machine 2 can be restricted depending on the selected activation mode.

The activation processing unit 901 activates the injection molding machine 2 in any one activation mode among a plurality of activation modes according to propriety of a condition defined in advance, or the like. The specific configuration, operation, and the like of the activation processing unit 901 relating to a plurality of activation modes will be described below.

The communication processing unit 902 controls the input interface 93 and the output interface 94, and performs communication with the outside (for example, other injection molding machines 2 or the external device 4) passing though the communication network 6. In other words, the communication processing unit 902 implements a communication function of the injection molding machine 2 with the outside. The communication processing unit 902 is implemented by, for example, a predetermined application program that is stored in the storage medium 92 and runs on the real time OS being executed on the CPU 91. Hereinafter, the same applies to the display processing unit 903, the operation input receiving unit 904, the setting processing unit 905, the control processing unit 906, and the normal return processing unit 907.

The display processing unit 903 performs control on the output unit 96 such that the output unit 96 displays various kinds of information relating to the injection molding machine 2. In other words, the display processing unit 903 implements a display function of making the output unit 96 display information relating to the injection molding machine 2.

The operation input receiving unit 904 receives the user's direct operation input from the input unit 95 or the remote operation input by way of the communication network 6 that is input to the controller 90 through the input interface 93. That is, the operation input receiving unit 904 implements an operation function of receiving an external operation input on the injection molding machine 2.

In a case where the user's direct operation input is made through the operation screen displayed on the output unit 96, the function (that is, the operation function) of the operation input receiving unit 904 may be included in the display processing unit 903.

The setting processing unit 905 changes various settings relating to the injection molding machine 2 according to a predetermined operation input (hereinafter, referred to as an "operation input of setting change" for convenience) received by the operation input receiving unit 904. In other words, the setting processing unit 905 implements a change function of changing the settings relating to the injection molding machine 2 according to the external operation input of setting change. In this case, setting change can include a case where any setting is newly defined from an unset state, in addition to a case where any setting content including an initial setting is changed from a state already defined to a different setting content. For example, the operation input of setting change may be performed by the user through operation screens prepared in advance for various kinds of setting change.

The settings of the injection molding machine 2 can include, for example, at least one of a setting of molding conditions, a setting of user information, a setting of external signals, a setting of monitoring, and a setting of a warning lamp.

The setting of the molding conditions includes, for example, a setting of the mold clamping unit 10, a setting of the injection unit 40, a setting of the ejector unit 50, and the like.

The controller 90 (specifically, the control processing unit 906 described below) generates a manipulated variable of equipment to be controlled based on a set value of a controlled variable indicating the molding conditions and a detection value of the controlled variable. As the equipment to be controlled, for example, power equipment is used, and more specifically, a motor, a heater, or the like is used. The controller 90 may generate the manipulated variable of the equipment to be controlled such that a difference between the set value of the controlled variable and the detection value of the controlled variable becomes zero.

Although a control system of the embodiment is feedback control, the control system may be feedforward control.

The setting of the user information includes, for example, a setting of an authority of an operation input on the operation screen or the like. For example, different authorities are set depending on skills or proficiency of users, and items that an operation input can be performed are set for each user.

The storage medium 92 of the controller 90 stores identification information (for example, a name, an identification number, a user identifier (ID), or the like) of the user in association with authority information of the user in advance. For example, the controller 90 acquires the identification information of the user who operates the injection molding machine 2 with a reader or the like, and decides permission or prohibition of various operation inputs based on the acquired identification information and information stored in the storage medium 92 in advance . The controller 90 may decide permission or prohibition of various operation inputs according to the identification information, such as the user ID, which can be input through the input unit 95.

As the reader, for example, a touch panel, a one-dimensional code reader, a two-dimensional code reader, or the like is used.

The setting of the external signals includes, for example, a setting of a condition that a predetermined signal is output from the injection molding machine 2 to external equipment, a setting of an operation of the injection molding machine 2, of which permission or prohibition is decided, according to the presence or absence of an input of a predetermined signal from the external equipment, and the like. As the external equipment, a take-out machine, a belt conveyor, a material supply device, a mold temperature control device, and the like are exemplified. The take-out machine takes out the molding product from the injection molding machine 2. The belt conveyor receives the molding product from the take-out machine and transports the molding product. The material supply device supplies the molding material to the injection unit 40. The mold temperature control device controls the temperature of the mold unit 30.

The controller 90 outputs a predetermined signal to the external equipment, thereby instructing a timing of an operation to the external equipment. The controller 90 has an interlock function of permitting an operation set in advance in a period during which the predetermined signal is input from the external equipment, and prohibiting the operation set in advance in a period during which an input of the predetermined signal from the external equipment is absent.

The interlock function may permit the operation set in advance in a period during which an input of the predetermined signal from the external equipment is absent, and may prohibit the operation set in advance in a period during which the predetermined signal is input from the external equipment.

The setting of monitoring includes, for example, a setting of allowable ranges of detection values of various detectors provided in the injection molding machine 2. As the detectors, a pressure detector, a temperature measurer, a position detector, a speed detector, a torque detector, and the like are exemplified.

The controller 90 outputs an alarm through the output unit 96 or the like in a case where the detection value of the detector is outside the allowable range. As the alarm, for example, an image (visual alarm), sound (auditory alarm), vibration (tactile alarm), or the like is used.

The setting of the warning lamp is a setting relating to a warning lamp (not shown) provided in the injection molding machine 2, and includes, for example, a setting relating to an identification display of the warning lamp. The warning lamp can be displayed in such an aspect that the kind of an abnormality of the injection molding machine 2, the external equipment, or the like can be identified, and an identification display of the kind of the abnormality is implemented by, for example, a combination of colors, or the like.

In a case where an abnormality is detected, the controller 90 performs control on the warning lamp and performs display of the warning lamp according to the kind of the detected abnormality.

The control processing unit 906 controls the drive unit (that is, the mold clamping unit 10, the injection unit 40, the ejector unit 50, and the like) of the injection molding machine 2 as described above according to the setting of the molding conditions set by the setting processing unit 905. That is, the control processing unit 906 implements a control function of controlling the drive unit of the injection molding machine 2 relating to a molding operation based on the setting relating to the molding conditions of the injection molding machine 2.

Hereinafter, among the functions of the injection molding machine 2, the communication function, the display function, the operation function, the change function, the control function, and the drive function described above may be referred to as "schematic functions" for convenience. Detailed function of the individual function included in the schematic functions may be referred to as a "detailed function" for convenience. A certain function (for example, a function relating to diagnosis described below or a function relating to maintenance) of the injection molding machine 2 may be implemented by the detailed function included in each of plurality of schematic functions.

In a case where the injection molding machine 2 is stopped in a state in which a predetermined abnormality is present, when the injection molding machine 2 is subsequently activated in a restricted activation mode, the normal return processing unit 907 executes various kinds of processing (hereinafter, referred to as "normal return processing) of returning the injection molding machine 2 to a normal state. That is, in the restricted activation mode, the activation processing unit 901 activates the injection molding machine 2 in a state in which a function (hereinafter, referred to as a "normal return function") implemented by the normal return processing unit 907 can be activated. In a case where the injection molding machine 2 is stopped in a state in which the predetermined abnormality is present, when the injection molding machine 2 is subsequently activated in the restricted activation mode described below, the normal return processing unit 907 may automatically execute the normal return processing or may execute the normal return processing according to the user's direct operation input, the remote operation input, or the like. Hereinafter, in the embodiment, the description is provided on an assumption that the predetermined abnormality as a target is an abnormality relating to a processing operation of the controller 90, as described above, the predetermined abnormality may be an abnormality of the drive unit of the injection molding machine 2.

The function of the normal return processing unit 907 may be used even in a case where the injection molding machine 2 is activated in an activation mode other than the restricted activation mode. For example, diagnosis processing or maintenance processing may be executed according to a predetermined operation input from the input unit 95 by the user or by way of the communication network 6 in a case where the injection molding machine 2 is activated in the usual activation mode.

For example, the normal return processing unit 907 executes processing (hereinafter, referred to as "diagnosis processing") relating to diagnosis of the injection molding machine 2 (specifically, a processing operation of the controller 90). The diagnosis processing can include, for example, detection processing of bugs of programs or parameter abnormalities (for example, setting abnormalities of the molding conditions) corresponding to various functions of the injection molding machine 2 installed on the controller 90. With this, the controller 90 can specify a specific abnormality of the injection molding machine 2.

For example, the normal return processing unit 907 executes processing (hereinafter, referred to as "maintenance processing") relating to maintenance of the injection molding machine 2 (specifically, a processing operation of the controller 90). The maintenance processing can include, for example, update processing of various programs installed on the controller 90 corresponding to various functions of the injection molding machine 2, correction processing of bugs of various programs or parameter abnormalities detected in the diagnosis processing, and the like. With this, the controller 90 can correct or the like an abnormal place and can specifically return the injection molding machine 2 to the normal state.

For example, the normal return processing unit 907 restores a state (for example, a system state of the real time OS) of a processing system of the controller 90 corresponding to various functions of the injection molding machine 2 to a state at a point of time in the past backed up in advance according to an external operation input or the like. The backup may be manually performed by the user or may be automatically by the controller 90 in compliance with a schedule defined in advance. Data (that is, backup data) at a certain point of time when backup is performed is saved in a nonvolatile internal memory, such as the storage medium 92, and the normal return processing unit 907 restores the state of the processing system of the controller 90 by reading backup data corresponding to a certain point of time in the past selected by an external operation input. With this, for example, the user can return the controller 90 to a system state before the abnormality of the processing operation occurs, and can return the injection molding machine 2 to the normal state.

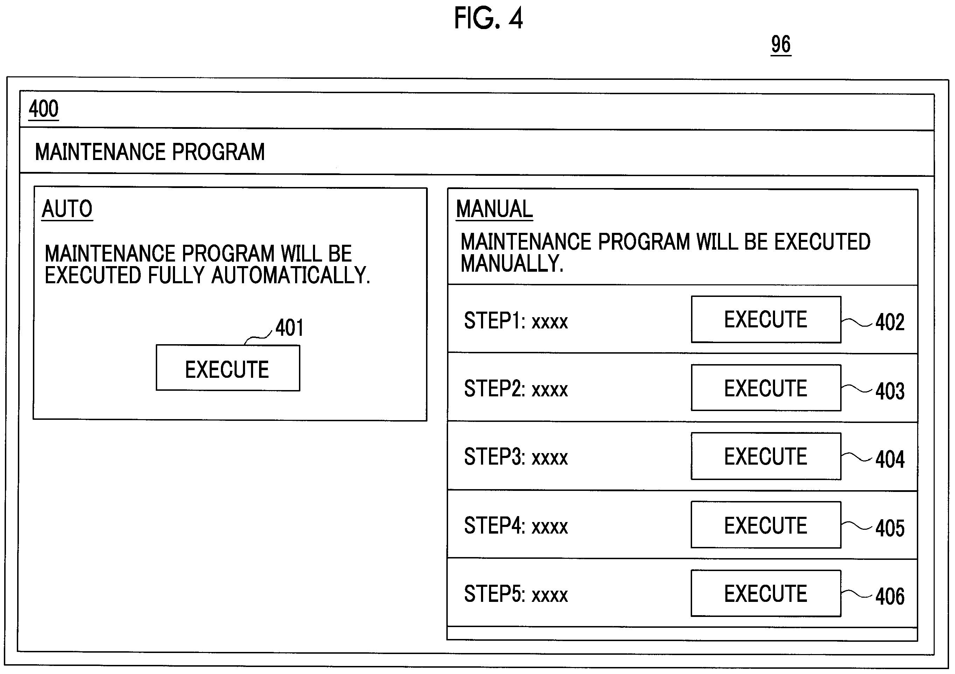

For example, in a case where an abnormality occurs that the injection molding machine 2 is stopped while specific processing that should be completed when the injection molding machine 2 is stopped is uncompleted, the normal return processing unit 907 executes processing (hereinafter, referred to as "retrial processing" for convenience) of executing the uncompleted processing. With this, the controller 90 can cope with, for example, a case where the injection molding machine 2 is stopped for any reason (for example, an erroneous stop operation of the user, shutoff due to an abnormality of the power relay 98, incompletion of reading of information needed for processing due to the storage device 97 being detached from the injection molding machine 2 (controller 90), or the like) during the execution of the specific processing. The controller 90 can cope with a case where processing (cyclic task) with high priority is executed at an abnormal frequency and specific processing with low priority is not executed, a case where needed information cannot be acquired from the outside due to an abnormality of the communication function, or the like, and as a result, specific processing cannot be executed, or the like. In this case, the uncompleted processing includes a case where the injection molding machine 2 is stopped while processing that should be originally executed cannot be executed, in addition to a case where the injection molding machine 2 is stopped during execution. The specific processing as a target of the retrial processing can include, for example, the diagnosis processing or the maintenance processing described above. Details of the retrial processing will be described below (see Figs. 4 to 7) .

### [Operation of Activation Processing Unit]

Next, the operation of the activation processing unit 901 will be described.

### <Details of Activation Mode>

A plurality of activation modes of the injection molding machine 2 described above include a so-called usual activation mode (hereinafter, referred to as a "usual activation mode") and an activation mode (hereinafter, referred to as a "restricted activation mode") where a part of functions of the injection molding machine 2 is restricted with respect to a case where the injection molding machine 2 is activated in the usual activation mode. In this case, restricting the functions can include stopping the functions, limiting the functions, or the like.

The usual activation mode is an activation mode that is usually used in order to produce a molding product as an original purpose. In the usual activation mode, for example, the user can exclude a special function for maintenance of the injection molding machine 2, or the like, and can basically all functions of the injection molding machine 2.

On the other hand, the restricted activation mode is, for example, an activation mode that is used in order to return the injection molding machine 2 to the normal state in a case where an abnormality relating to various kinds of control processing occurs in the controller 90, or the like. In the usual activation mode, there are a plurality of processing tasks with relatively high priority corresponding to various functions of the injection molding machine 2 implemented by the controller 90. For this reason, in a case where the injection molding machine 2 is activated in the usual activation mode, there is a possibility that the controller 90 cannot execute processing of returning the injection molding machine 2 to the normal state, such as the diagnosis processing or the maintenance processing with relatively low priority. In contrast, in the restricted activation mode, functions or the like not needed for returning the injection molding machine 2 to the normal state are appropriately restricted, whereby, for example, an environment in which the number of cyclic tasks to be processed in parallel can be reduced, and the diagnosis processing, the maintenance processing, or the like with relatively low priority can be executed is implemented.

The restricted activation mode may be used in, for example, a case where an abnormality occurs in the drive unit (that is, the mold clamping unit 10, the injection unit 40, the ejector unit 50, and the like) of the injection molding machine 2 as a control target of the control processing unit 906, in addition to an abnormality relating to various kinds of control processing in the controller 90. In this case, in the restricted activation mode, functions with relatively low need for returning the drive unit to the normal state should be restricted.

In the restricted activation mode, as described above, the activation processing unit 901 restricts a part of the functions of the injection molding machine 2 that are activated in the usual activation mode, specifically, functions with relatively low need for returning the injection molding machine 2 to the normal state. In other words, in the restricted activation mode, the activation processing unit 901 activates only a part (that is, the remaining functions excluding a part of restricted functions) of the functions of the injection molding machine 2 that are activated in the usual activation mode.

For example, in the restricted activation mode, the activation processing unit 901 restricts the whole of at least one schematic function among a plurality of schematic functions described above.

Specifically, the activation processing unit 901 may restrict the control function or the drive function in the restricted activation mode. This is because the restriction function or the drive function has low relevance with an abnormality of the processing operation of the controller 90 and causes no problem even though restricted. The activation processing unit 901 may restrict the change function in the restricted activation mode. This is because, in a case where an abnormality is present in the processing operation of the controller 90, when various settings are changed by the user or the like, there is a possibility that continuation of an abnormal state is promoted.

On the other hand, in the restricted activation mode, the activation processing unit 901 may activate the injection molding machine 2 in a state in which the display function or the operation function is valid. With this, for example, the user can view information relating to processing corresponding to a function of returning the injection molding machine 2 to the normal state, such as the diagnosis processing or the maintenance processing, through the output unit 96 or can perform an operation to execute the processing. In the restricted activation mode, the activation processing unit 901 may activate the injection molding machine 2 in a state in which the communication function is valid. With this, the user can execute processing of returning the injection molding machine 2 to the normal state, for example, by a remote operation by way of the communication network 6.

For example, the activation processing unit 901 restricts a part of the detailed function included in at least one schematic function among a plurality of schematic functions described above in the restricted activation mode.

Specifically, in the restricted activation mode, the activation processing unit 901 may restrict a part of the display function in the display function, which is valid in the usual activation mode. More specifically, in the restricted activation mode, the activation processing unit 901 may restrict display of a part of information with low need for returning the injection molding machine 2 to the normal state among various kinds of information that are displayed by the display function in the usual activation mode. In the restricted activation mode, the activation processing unit 901 may display a part of operation screens with low need for returning the injection molding machine 2 to the normal state among the operation screens displayed by the display function in an inoperable state. In this case, the display processing unit 903 makes the output unit 96 display the operation screens in an inoperable state, for example, by invalidating links of icons as an operation target of the operation screens, darkening all operation screens, or the like.

Although the display function is specifically restricted by the display processing unit 903 in the restricted activation mode, the output unit 96 may perform a specific restriction, for example, by determining whether or not the activation mode is the restricted activation mode, whether or not various kinds of information as an output target are a restriction target, or the like.

In the restricted activation mode, the activation processing unit 901 may restrict a part of the operation function in the operation function, which is valid in the usual activation mode. More specifically, in the restricted activation mode, the activation processing unit 901 may restrict reception of a part of operation inputs with low need for returning the injection molding machine 2 to the normal state among operation inputs received by the operation function.

On the other hand, in the restricted activation mode, the activation processing unit 901 may activate the injection molding machine 2 in a state in which a part of the display function with high need for returning the injection molding machine 2 to the normal state in the display function, which is valid in the usual activation mode, can be activated. More specifically, in the restricted activation mode, the activation processing unit 901 may activate the injection molding machine 2, for example, in a state in which information relating to the diagnosis function of the maintenance function of the injection molding machine 2 can be displayed on the output unit 96. In this case, information relating to the diagnosis function includes information relating to an abnormality that occurs in the injection molding machine 2 at present, such as information relating to a specified abnormal place. With this, the user can view information with high need for returning the injection molding machine 2 to the normal state or can use the operation screen with high need similarly.

Similarly, in the restricted activation mode, the activation processing unit 901 activates the injection molding machine 2 in a state in which a part of the operation function with high need for returning the injection molding machine 2 to the normal state in the operation function, which is valid in the usual activation mode can be activated. More specifically, in the restricted activation mode, the activation processing unit 901 activates the injection molding machine 2, for example, in a state in which the direct operation input from the input unit 95 or the remote operation input by way of the communication network 6 relating to the diagnosis function or the maintenance function of the injection molding machine 2 can be received. With this, the user can perform an operation with high need for returning the injection molding machine 2 to the normal state on the injection molding machine 2.

That is, in the restricted activation mode, the activation processing unit 901 may activate a part of functions including a specific function of returning the injection molding machine 2 to the normal state, such as the diagnosis function or the maintenance function, among various functions, which are valid in the usual activation mode.

In the restricted activation mode, the activation processing unit 901 may activate the injection molding machine 2 in a state in which a function of displaying programs or parameters corresponding to the various functions of the injection molding machine 2 on the output unit 96 is valid in the display function, which is valid in the usual activation mode. With this, for example, the user can confirm the programs or the parameters and can visually identify a bug of a program, an abnormal value of a parameter, or the like.

In the restricted activation mode, the activation processing unit 901 may activate the injection molding machine 2 in a state in which a function of receiving a predetermined external operation input and changing the programs or the parameters corresponding to various functions of the injection molding machine 2 is valid in the operation function and the change function, which are valid in the usual activation mode. With this, for example, the user can correct the bug of the program, the value of the abnormal parameter, or the like confirmed through the above-described display and can return the injection molding machine 2 to the normal state.

### <Selection of Activation Mode>

The activation processing unit 901 determines (selects) whether to activate the injection molding machine 2 in the usual activation mode or in the restricted activation mode according to the propriety of the predetermined condition as described above, and activates the injection molding machine 2 in the selected activation mode.

For example, the activation processing unit 901 activates the injection molding machine 2 in the usual activation mode in a case where a usual activation operation on the activation switch 95a is performed. On the other hand, the activation processing unit 901 activates the injection molding machine 2 in the restricted activation mode in a case where a special activation operation different from the usual activation operation on the activation switch 95a is performed. In this case, the usual activation operation is, for example, a push operation to push a push button type activation switch 95a for a comparatively short time, and the special activation operation may be a so-called long push operation in which the activation switch 95a is continued to be pushed for a comparatively long time. The special activation operation may be a series of operations in which the activation switch 95a is operated in a predetermined operation pattern (for example, a predetermined number of push operations are performed within a predetermined time, or the like) . The special activation operation may be an operation in which the activation switch 95a and another operation means (for example, another operation switch) included in the input unit 95 are combined (for example, an operation to substantially simultaneously push the activation switch 95a and another operation switch. With this, the user can select the activation mode of the injection molding machine 2 by changing an operation content of the activation switch 95a.

For example, when the activation switch 95a is operated, the activation processing unit 901 makes the output unit 96 display an activation mode selection screen and activates the injection molding machine 2 in the activation mode selected by the user through the activation mode selection screen.

For example, the activation processing unit 901 activates the injection molding machine 2 in the usual activation mode in a case where an operation input of a remote activation operation indicating that the usual activation mode is selected is input. On the other hand, the activation processing unit 901 activates the injection molding machine 2 in the restricted activation mode in a case where an operation input of a remote activation operation indicating that the restricted activation mode is selected is input. In this case, for example, an operation screen for an activation operation is displayed on the output unit 96 of another injection molding machine 2 or a display of the external device 4, on which the remote activation operation is performed, according to a predetermined operation. With this, the user can select the activation mode through the operation screen and can activate the injection molding machine 2.

For example, the activation processing unit 901 determines the activation mode where the injection molding machine 2 is activated according to whether the activation operation is the direct operation input or the remote operation input. Specifically, in a case where the direct operation input corresponding to the activation operation is input through the input unit 95, the activation processing unit 901 selects the activation mode where the injection molding machine 2 is activated according to the above-described operation content (that is, whether the activation operation is the usual activation operation or the special activation operation). On the other hand, in a case where the remote operation input corresponding to the activation operation is input by way of the communication network 6, the activation processing unit 901 activates the injection molding machine 2 in the restricted activation mode.

For example, the activation processing unit 901 selects the activation mode according to whether or not a predetermined abnormality to be a target is present at the time of a previous stop. Specifically, while, in a case where the injection molding machine 2 is stopped in a state in which the predetermined abnormality to be a target is absent, the injection molding machine 2 is activated in the usual activation mode at the time of next activation, in a case where the injection molding machine 2 is stopped in a state in which the predetermined abnormality is present, the injection molding machine 2 is activated in the restricted activation mode at the time of next activation. With this, since the restricted activation mode is automatically selected corresponding to an abnormal state of the injection molding machine 2, it is possible to improve user's convenience.

### [Operation of Normal Return Processing Unit]

Next, an example of the operation of the normal return processing unit 907, specifically, retrial processing will be described referring to Figs. 4 to 7. Hereinafter, in the example, although description will be provided on an assumption that specific processing to be a target of retrial processing is maintenance processing, the specific processing may be of course diagnosis processing.

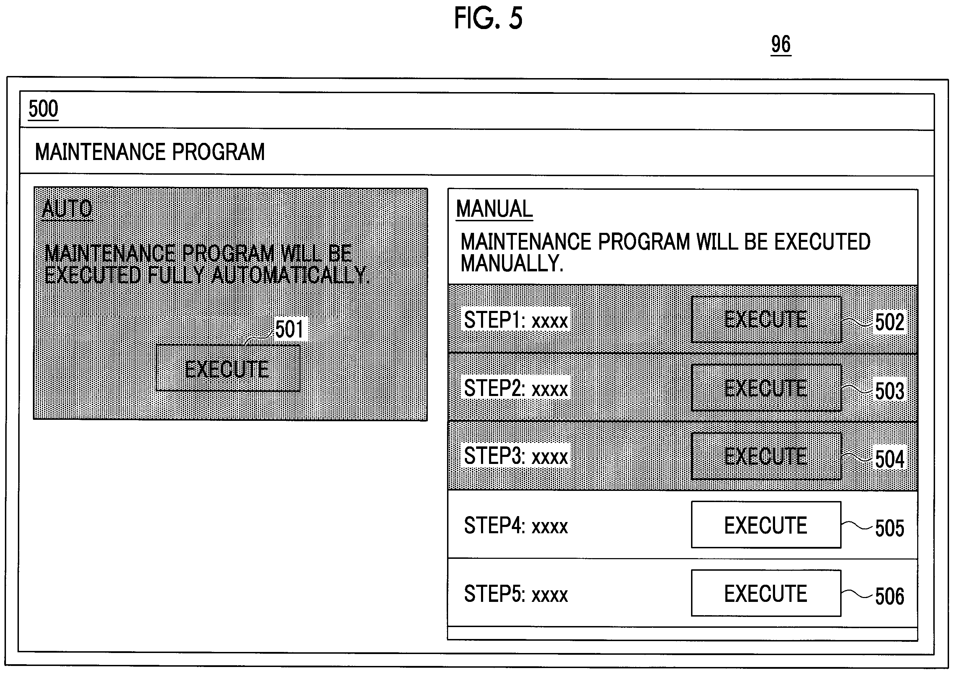

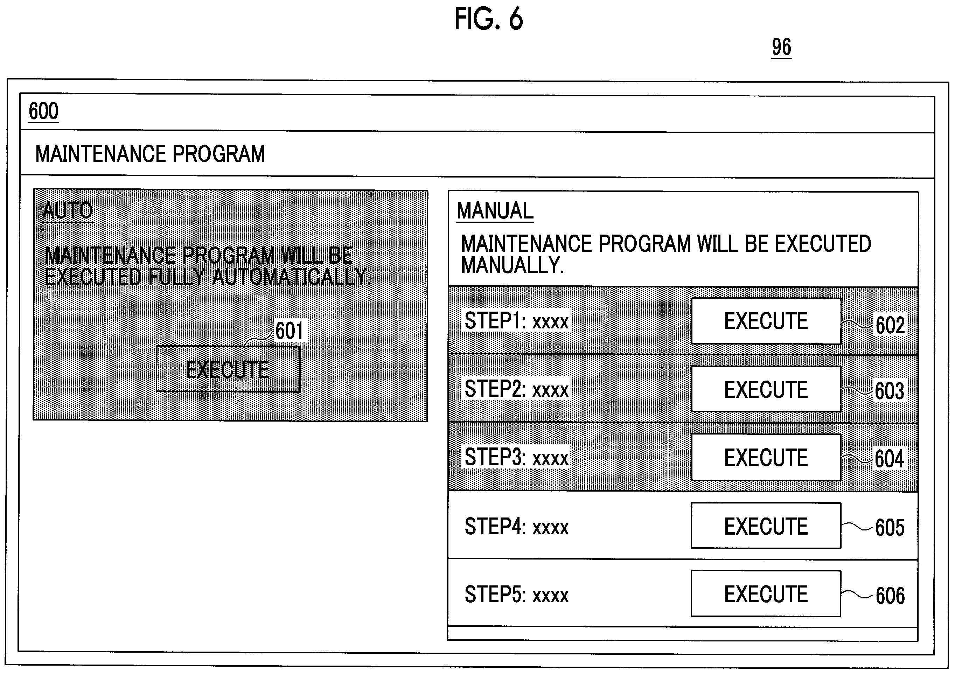

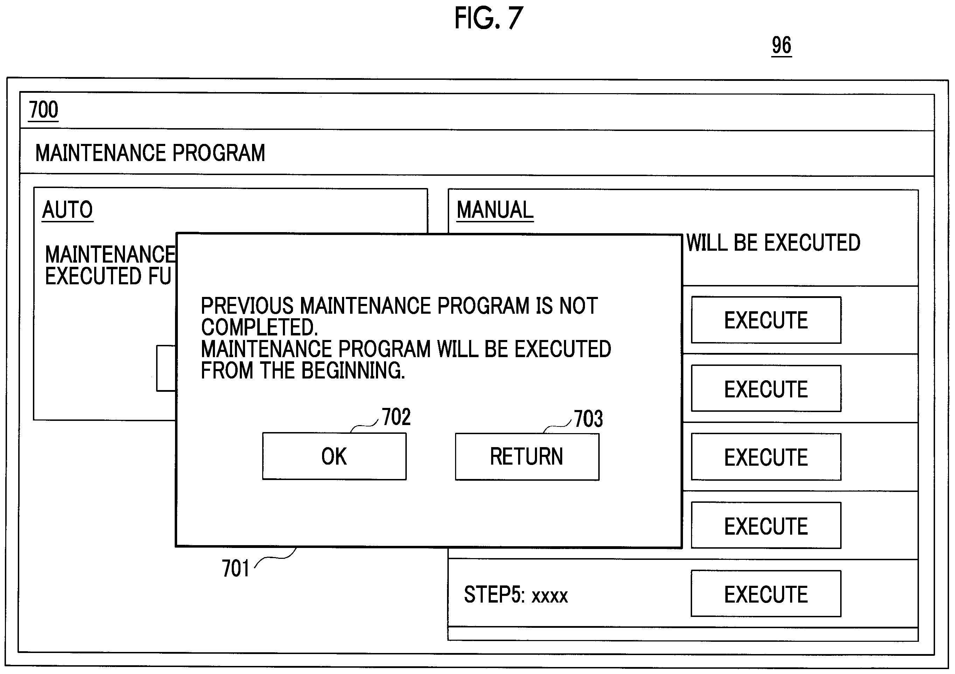

Fig. 4 is a diagram showing an example (operation screen 400) of a usual operation screen relating to the maintenance processing that is displayed on the output unit 96. Fig. 5 is a diagram showing an example (operation screen 500) of an operation screen of retrial processing for the maintenance processing that is displayed on the output unit 96. Fig. 6 is a diagram showing another example (operation screen 600) of an operation screen of the retrial processing for the maintenance processing that is displayed on the output unit 96. Fig. 7 is a diagram showing still another example of an operation screen (operation screen 700) of the retrial processing for the maintenance processing that is displayed on the output unit 96.

As shown in Fig. 4, the operation screen 400 includes a button icon 401 for executing the entire maintenance processing in a batch and button icons 402 to 406 for individually executing a series of processes (in this example, five processes) constituting the maintenance processing.

The user can make a series of processes (five processes) corresponding to the maintenance processing be automatically executed by operating the button icon 401 using the input unit 95. The user can make any one process of a series of processes corresponding to the maintenance processing be manually executed by operating any one of the button icons 402 to 406 using the input unit 95.

In contrast, as shown in Fig. 5, although button icons 501 to 506 corresponding to the button icons 401 to 406 of the operation screen 400 are displayed on the operation screen 500 relating to the retrial processing, a part of button icons is in an inoperable state. Specifically, the button icon 501 for automatically executing all processes of the uncompleted maintenance processing and the button icons 502 to 504 corresponding to the already completed processes among all processes of the uncompleted maintenance processing are displayed in a gray-out state (for example, a state in which a link is invalid) indicating an inoperable state. With this, the user can execute the maintenance processing from the fourth process that is a first process following the already completed three processes . That is, the normal return processing unit 907 executes the uncompleted maintenance processing from a first process of uncompleted processes according to an external operation input.

When the injection molding machine 2 is activated in the restricted activation mode, the normal return processing unit 907 may automatically execute the uncompleted maintenance processing from the first process (in this example, the fourth process) of the uncompleted processes without depending on an external operation input.

As shown in Fig. 6, although button icons 601 to 606 corresponding to the button icons 401 to 406 of the operation screen 400 are displayed on the operation screen 600 relating to retrial processing, as in Fig. 5, a part of button icons is in an inoperable state. Specifically, the button icon 501 for automatically executing all processes of the uncompleted maintenance processing is displayed in a gray-out state indicating an inoperable state. On the other hand, unlike Fig. 5, while the display units corresponding to the already completed processes among all processes of the maintenance processing are grayed out, the button icons 602 to 604 corresponding to the completed processes are not grayed out and are displayed in an operable state. With this, the user can select any process and can make the uncompleted maintenance processing be executed sequentially from the selected process. That is, the normal return processing unit 907 executes the uncompleted maintenance processing from a process selected by an external operation input according to an external operation input. In this case, in a case where the maintenance processing from the already completed process is selected by the user, the normal return processing unit 907 deletes predetermined information (a part of a maintenance program) saved in the storage medium 92 corresponding to a process to be retried among the already completed processes, and performs new maintenance processing.

As shown in Fig. 7, an operation window 701 is displayed on the operation screen 700 relating to retrial processing in a superimposed manner on the same screen as the operation screen 400. The operation window 701 includes text information of a content indicating that previous maintenance processing is uncompleted and a content indicating that the uncompleted maintenance processing is executed from the beginning. Then, the operation window 701 includes a button icon 702 for consenting to execute the uncompleted maintenance processing from the beginning and a button icon 703 for returning to another screen (for example, a last operation screen for transition to an operation screen relating to the maintenance processing). With this, the user can execute the uncompleted maintenance processing from the beginning by operating the button icon 702 through the input unit 95 or the like in compliance with an instruction on the operation screen 700. That is, the normal return processing unit 907 deletes predetermined information (a part of the maintenance program) saved in the storage medium 92 corresponding to the completed processes in the uncompleted maintenance processing according to an external operation input and executes the uncompleted maintenance processing operation from the beginning.

When the injection molding machine 2 is activated in the restricted activation mode, the normal return processing unit 907 may automatically delete the predetermined information (a part of the maintenance program) saved in the storage medium 92 corresponding to the completed processes in the uncompleted maintenance processing without depending on an external operation input and may execute the uncompleted maintenance processing operation from the beginning.

### [Processing Flow of Controller at the time of Activation of Injection Molding Machine]

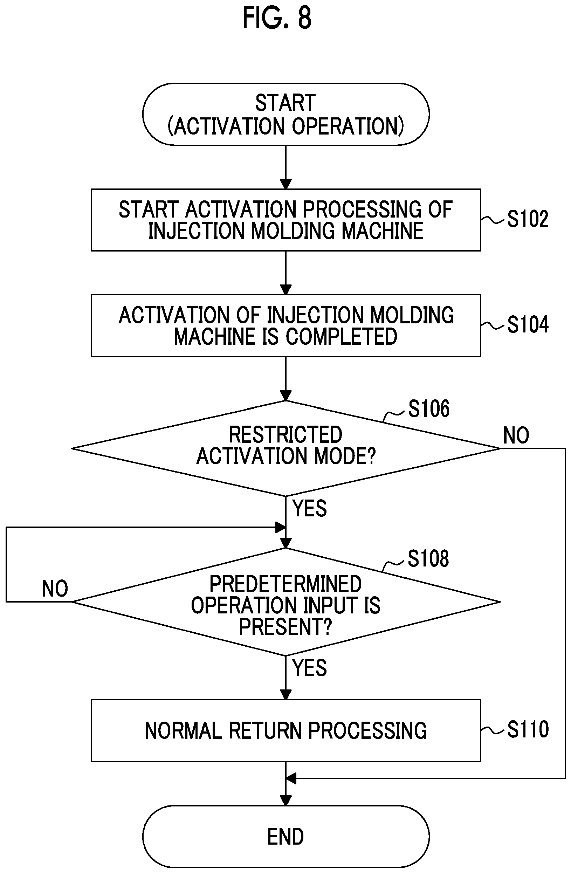

Next, a processing flow of the controller 90 at the time of activation of the injection molding machine 2 will be described referring to Figs. 8 to 10.

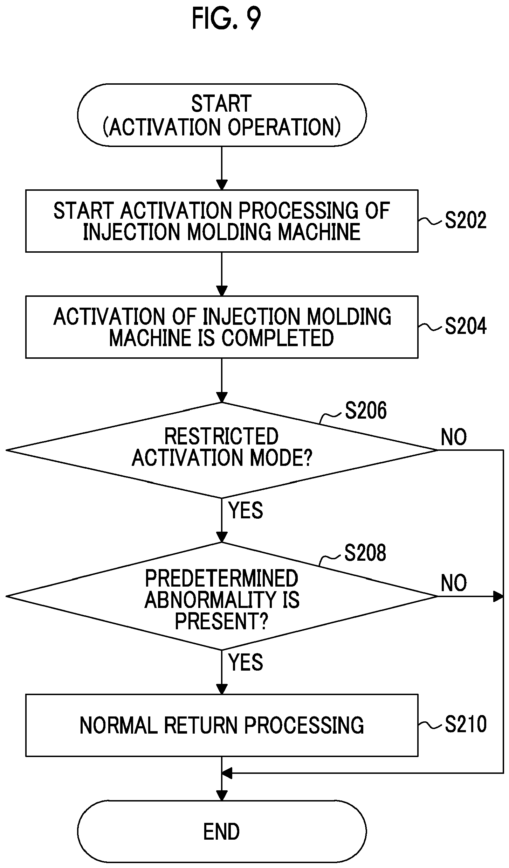

Fig. 8 is a flowchart schematically showing an example of processing of the controller 90 at the time of activation of the injection molding machine 2. The processing of the flowchart is executed initially after the controller 90 is activated when an operation input corresponding to the activation operation is input to the controller 90 in the stopped state of the injection molding machine 2. Hereinafter, the same applies to processing of Fig. 9.

In Step S102, the activation processing unit 901 selects the activation mode according to a content of the operation input corresponding to the activation operation and starts activation processing of the injection molding machine 2 according to the selected activation mode.

Then, in Step S104, the activation processing unit 901 completes the activation of the injection molding machine 2.

In Step S106, the normal return processing unit 907 determines whether or not the activation mode is the restricted activation mode. In a case where the activation mode is the restricted activation mode, the normal return processing unit 907 progresses to Step S108, and in a case where the activation mode is not the restricted activation mode, the normal return processing unit 907 completes the present processing.

In Step S108, the normal return processing unit 907 determines whether or not a predetermined operation input, that is, an operation input (for example, an operation input corresponding to an operation on the above-described operation screens 500 to 700) for executing the normal return processing is input from the outside. In a case where the operation input for executing the normal return processing is input from the outside, the normal return processing unit 907 progresses to Step S110, and otherwise, the normal return processing unit 907 repeats the determination of Step S108 until the injection molding machine 2 is stopped.

In Step S110, the normal return processing unit 907 executes the normal return processing according to the content of the input operation input and ends the present processing.

In this way, in a case where the injection molding machine 2 is activated in the restricted activation mode, the controller 90 can return the injection molding machine 2 to the normal state by correcting or the like an abnormality at the time of a previous stop according to a user's external operation input. With this, in a case where the abnormality at the time of the previous stop is confirmed, the user operates the injection molding machine 2 by the direct operation input or the remote operation input, whereby the injection molding machine 2 can be activated in the restricted activation mode and the normal return processing can be executed.

Subsequently, Fig. 9 is a flowchart schematically showing another example of processing of the controller 90 at the time of activation of the injection molding machine 2.

Since the processing of Steps S202 to S206 is the same as Steps S102 to S106 of Fig. 8, description will not be repeated.

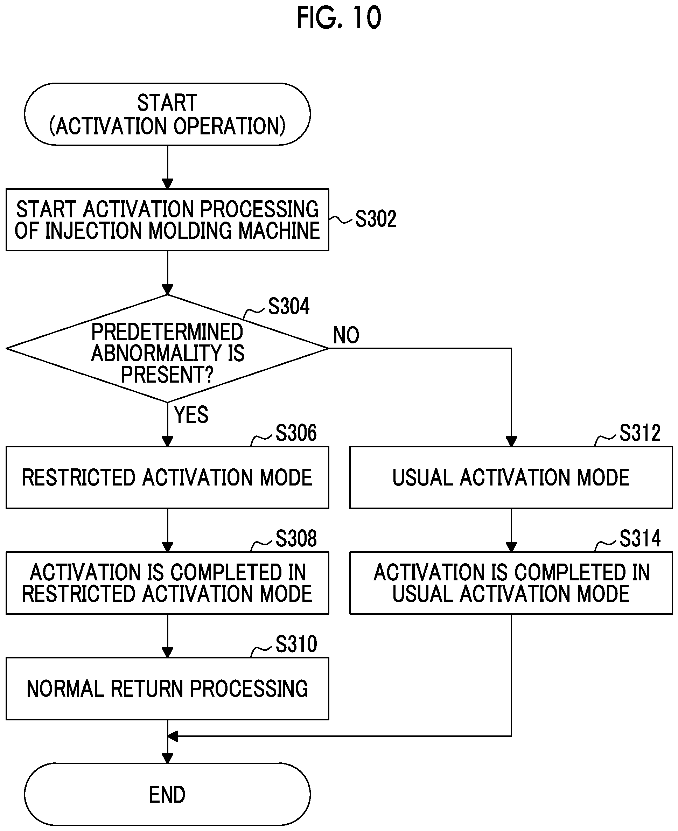

In Step S208, the normal return processing unit 907 determines whether or not a predetermined abnormality as a target is present in the injection molding machine 2 at the time of the previous stop of the injection molding machine 2. The presence or absence of the target abnormality at the time of the previous stop may be identified, for example, by referring information (flag value or the like) for specifying the presence or absence of an abnormality, the kind of abnormality, or the like recorded in a nonvolatile internal memory (for example, the storage medium 92) of controller 90 or the like when the injection molding machine 2 is stopped. Hereinafter, the same applies to Step S304 of Fig. 10 described below. In a case where the target abnormality occurs at the time of the previous stop, the normal return processing unit 907 progresses to Step S210, and in a case where the target abnormality does not occur, the normal return processing unit 907 ends the present processing.

In Step S210, the normal return processing unit 907 executes the normal return processing according to the kind the target abnormality, or the like, and ends the present processing.

In this way, in a case where the injection molding machine 2 is activated in the restricted activation mode, the controller 90 can automatically determine, correct, and the like the abnormality at the time of the previous stop and can return the injection molding machine 2 to the normal state. With this, in a case where the abnormality at the time of the previous stop is confirmed, the user merely operates the injection molding machine 2 by the direct operation input or the remote operation input to activate the injection molding machine 2 in the restricted activation mode, whereby the normal return processing conforming to the abnormality can be automatically executed.

In this example, although the normal return processing is automatically executed without depending on an external operation input, the normal return processing may be of course executed under a condition that a predetermined external operation input (for example, an operation on the above-described operation screens 500 to 700) for executing the normal return processing is present. In this case, for example, processing of making the output unit 96 display the operation screens 500 to 700 and the like and processing of determining whether or not the predetermined external operation input on the operation screens 500 to 700 and the like is present are added between Step S108 and Step S110. Then, in the latter determination processing, in a case where the predetermined operation input is absent, the determination processing may be repeated as long as the present restricted activation mode is continued.

Subsequently, Fig. 10 is a flowchart schematically showing still another example of processing of the controller 90 at the time of activation of the injection molding machine 2. The processing of the flowchart is executed initially after the activation of the controller 90, for example, when an operation input corresponding to the activation operation is input to the controller 90 in the stopped state of the injection molding machine 2.

In Step S302, the activation processing unit 901 starts the activation processing of the injection molding machine 2.

In Step S304, the activation processing unit 901 determines whether or not a predetermined abnormality as a target is present in the injection molding machine 2 at the time of a previous stop of the injection molding machine 2. The normal return processing unit 907 progresses to Step S306 in a case where the target abnormality occurs at the time of the previous stop, and progresses to Step S312 in a case where the target abnormality does not occur.

In Step S306, the activation processing unit 901 selects the restricted activation mode as the activation mode of the injection molding machine 2 and activates the injection molding machine 2 in the selected restricted activation mode.

Then, in Step S308, the activation processing unit 901 completes the activation of the injection molding machine 2 in the restricted activation mode.

Since processing of Step S310 is the same as Step S210 of Fig. 9, description will not be repeated.

On the other hand, in Step S312, the activation processing unit 901 selects the usual activation mode as the activation mode of the injection molding machine 2 and activates the injection molding machine 2 in the selected usual activation mode.

Then, in Step S314, the activation processing unit 901 completes the activation of the injection molding machine 2 in the usual activation mode and ends the present processing.

In this way, in a case where the target abnormality occurs at the time of the previous stop, the controller 90 can automatically activate the injection molding machine 2 in the restricted activation mode, and can return the injection molding machine 2 to the normal state by correcting or the like the abnormality at the time of the previous stop. With this, the user merely operates the injection molding machine 2 by the direct operation input or the remote operation input without recognizing the presence or absence of the abnormality at the time of the previous stop, and activates the injection molding machine 2, whereby the normal return processing conforming to the abnormality can be automatically executed in the restricted activation mode.

### [Specific Example of Operation of Injection Molding Machine relating to Restricted Activation Mode]

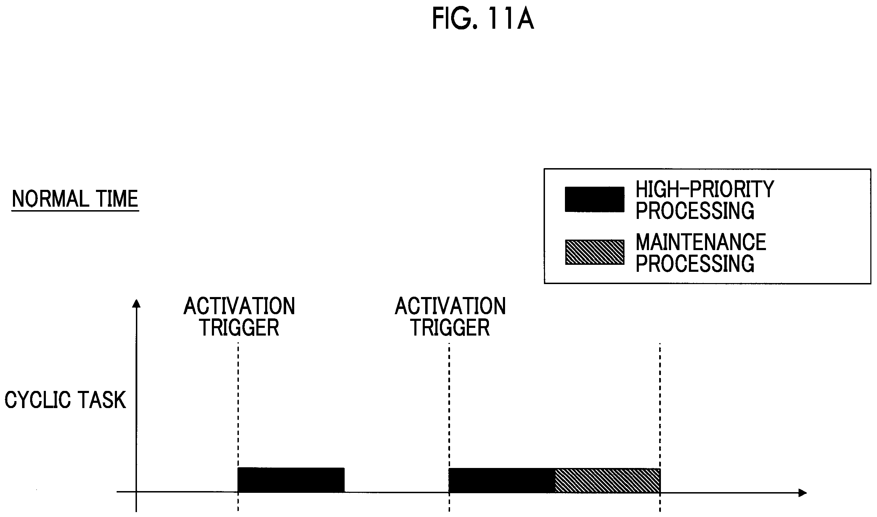

Next, a specific example of the operation of the injection molding machine 2 relating to the restricted activation mode will be described referring to Figs. 11A to 12.

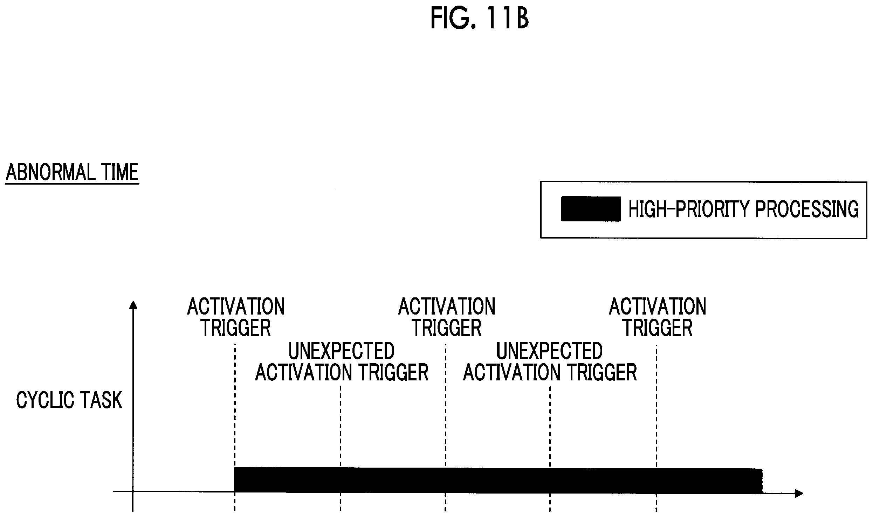

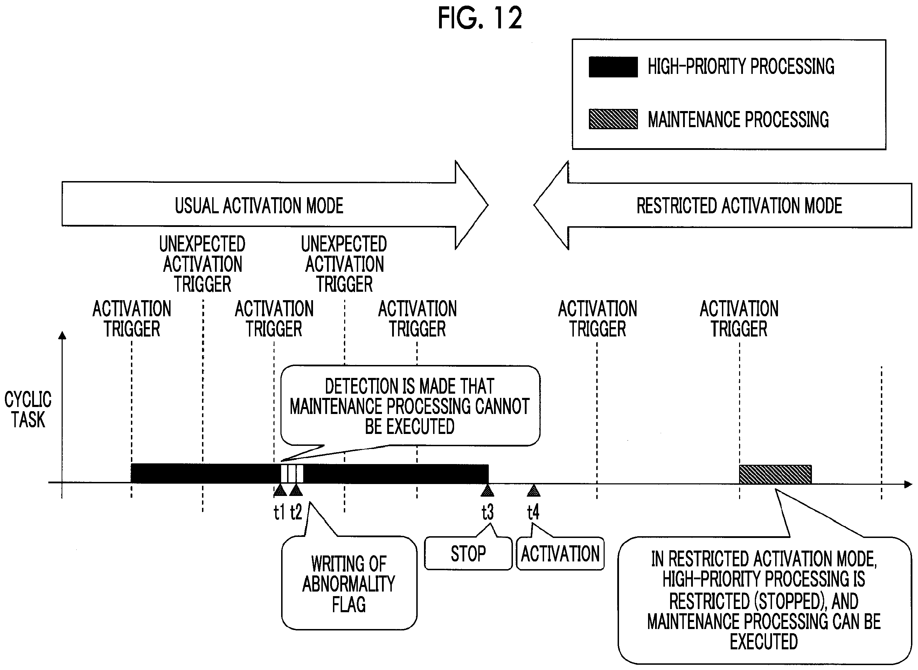

Fig. 11 (Figs. 11A and 11B) is a diagram illustrating a specific example of an abnormality to be a target of the normal return processing. Specifically, Fig. 11A is a diagram showing the operation of the injection molding machine 2 at a normal time in the usual activation mode, and Fig. 11B is a diagram showing the operation of the injection molding machine 2 at an abnormal time in the usual activation mode. Fig. 12 is a timing chart showing a specific example of the operation of the injection molding machine relating to the restricted activation mode.

As shown in Fig. 11A, in order to process processing relating to a plurality of functions in parallel, the controller 90 implements a specific function in such an aspect that a task corresponding to the specific function is activated cyclically. In this case, for example, the controller 90 executes processing (hereinafter, referred to as "high-priority processing") corresponding to a function with relatively high priority of producing a molding product as an original purpose of the injection molding machine 2, such as the control function, with priority, and executes the maintenance processing or the like with relatively low priority in a period during which the high-priority processing is not executed.

On the other hand, as shown in Fig. 11B, the controller 90 can be constantly in an abnormal state in which high-priority processing is executed, for example, when an activation trigger of high-priority processing is generated more than usual due to an error of a setting, a bug of a program, or the like. When this happens, during the operation of the injection molding machine 2, there is a possibility that, while the maintenance processing and the like with relatively low priority to be executed are not executed, the injection molding machine 2 is stopped. Since the abnormal state is continued even at the time of next activation in the usual activation mode, even though reactivation is performed any number of times, an abnormality that the maintenance processing is not executed is not eliminated.

In contrast, as shown in Fig. 12, in this example, when detection is made in the usual activation mode that the maintenance processing is not executed at a timing at which expected maintenance processing is executed (time t1), the controller 90 records an abnormality flag in a nonvolatile internal memory, such as the storage medium 92 (time t2).

Then, after the injection molding machine 2 is stopped (time t3), when the operation input corresponding to the activation operation is input (time t4), the controller 90 activates the injection molding machine 2 in the restricted activation mode according to the abnormality flag in the internal memory (corresponding to the processing of Step S304 of Fig. 10 described above). In particular, in this example, the controller 90 (the activation processing unit 901) activates the injection molding machine 2 in the restricted activation mode in a state in which only uncompleted (incompletely executed) maintenance processing can be activated. With this, the high-priority processing is not executed even at a timing at which the high-priority processing is executed, and the controller 90 (specifically, the normal return processing unit 907) can execute the uncompleted maintenance processing through retrial processing.

In this way, in this example, in a case where the maintenance processing with relatively low priority cannot be executed due to an abnormality that an execution frequency of the high-priority processing with relatively high priority becomes higher than usual, when activation is subsequently performed in the restricted activation mode, the controller 90 executes only the maintenance processing among the processing that is executed in a case where activation is performed in the usual activation mode. With this, the controller 90 can eliminate an abnormality that the maintenance processing is not executed.

In this example, although the specific processing to be a target of the retrial processing is the maintenance processing, the specific processing may be of course the diagnosis processing.

### [Modification and Alteration]

Although the mode for carrying out the invention has been described above in detail, the invention is not limited to such a specific embodiment, and various modifications and alterations can be made without departing from the scope of the invention described in the claims.

For example, in the above-described embodiment, although the injection molding machine 2 is activated in the restricted activation mode in a case of bugs of programs, parameter abnormalities, or the like relating to various functions of the injection molding machine 2, the injection molding machine 2 may be activated in the restricted activation mode in a case where the controller 90 or the like is infected with a computer virus or the like. Specifically, the injection molding machine 2 may shut off connection with a network and may be activated in a restricted activation mode where the communication function is restricted in a case where the controller 90 or the like is infected with a computer virus, or the like. This is to restrain the spread of the computer virus to the outside.

In the above-described embodiment and the modification example, although the injection molding machine 2 is activated in the restricted activation mode where a part of functions of the injection molding machine 2 is restricted in a case where an abnormality relating to the injection molding machine 2 is present, such as a case where an abnormality relating to various kinds of control processing occurs in the controller 90, the injection molding machine 2 may be activated in the restricted activation mode regardless of the presence or absence of an abnormality.

Specifically, for example, in a case where a predetermined program is automatically updated at the time of activation of the injection molding machine 2, the injection molding machine 2 may be activated in a restricted activation mode where only a minimum function needed for updating the program (for example, a communication function of receiving needed update files, or the like) is valid. This is because, at the time of update of various programs of the injection molding machine 2, for example, the need for executing the drive function of producing a molding product, or the like is low.

At the time of the activation of the injection molding machine 2, for example, in a case where diagnosis processing (self-diagnosis) reserved to be executed in advance is executed, the injection molding machine 2 may be activated in a restricted activation mode where only a minimum function needed for self-diagnosis is valid. This is because, at the time of the self-diagnosis of the injection molding machine 2, for example, the need for executing the drive function of producing a molding product, or the like is low.

At the time of the activation of the injection molding machine 2, in a case where automatic activation of an application relating to the controller 90 is involved, the injection molding machine 2 may be activated, for example, in a restricted activation mode, in which the operation function is temporarily restricted, in conformity with the activation of the application. This is because the need that an unneeded operation is received is low at the time of the activation of the application.

On an assumption that the controller 90 or the like performs failure prediction from an operation situation or the like of the injection molding machine 2, at the time of the activation of the injection molding machine 2, in a case where the occurrence of a failure is predicted, the injection molding machine 2 may be automatically activated in the restricted activation mode. This is because, in a case where the occurrence of a failure is predicted, the need that the diagnosis processing or the maintenance processing is executed after an unneeded function is restricted is high.

In the above-described embodiment and the modification example, although, in a case where an abnormality relating to various kinds of control processing occurs in the controller 90 or the like, for example, the normal return processing is executed by correction of an abnormal place, such as a bug of a program or an abnormality of a parameter, files (for example, setting files, activation files, or the like) corresponding to the abnormal place themselves may be replaced with backup files. Specifically, in a state in which an abnormality does not occur, a backup copy of normal files is secured automatically or manually, and when an abnormality occurs, replacement of abnormal files with the backup copy may be performed as normal return processing. In this case, another backup copy of the backup copy used for replacement may be secured.

### Reference Signs List

- 1: injection molding system
- 2: injection molding machine
- 4: external device
- 10: mold clamping unit(drive unit)
- 12: stationary platen
- 13: movable platen
- 15: support platen
- 20: toggle mechanism
- 21: mold clamping motor
- 40: injection unit (drive unit)
- 41: cylinder
- 42: nozzle
- 43: screw
- 45: plasticizing motor
- 46: injection motor
- 47: pressure detector
- 50: ejector unit (drive unit)
- 51: ejector motor
- 52: motion conversion mechanism
- 53: ejector rod
- 90: controller
- 91: CPU
- 92: storage medium
- 93: input interface
- 94: output interface
- 95: input unit
- 96: output unit (display unit)
- 97: storage device
- 98: power relay
- 901: activation processing unit
- 902: communication processing unit
- 903: display processing unit
- 904: operation input receiving unit
- 905: setting processing unit
- 906: control processing unit
- 907: normal return processing unit

## Claims

1. An injection molding machine comprising:
a mold clamping unit configured to clamp a mold unit;
an injection unit configured to fill the mold unit clamped by the mold clamping unit with a molding material; and
an ejector unit configured to eject a molding product from the mold unit after the molding material filled by the injection unit is cooled and solidified, **characterized in that**
the injection molding machine is configured to be activated in a usual activation mode or in a restricted activation mode where a part of functions is restricted with respect to a case where the injection molding machine is activated in the usual activation mode, and
the injection molding machine is configured to be activated in the restricted activation mode in a state in which a diagnosis function relating to diagnosis of the injection molding machine or a maintenance function relating to maintenance of the injection molding machine or a communication function with an outside of the injection molding machine are valid.

2. The injection molding machine according to claim 1,
wherein the injection molding machine has schematic functions including a display function of making a display unit display information relating to the injection molding machine, an operation function of receiving an external operation input on the injection molding machine, a change function of changing a setting relating to the injection molding machine according to the operation input, a control function of controlling a drive unit relating to a molding operation based on the setting relating to molding conditions of the injection molding machine, a drive function of activating the drive unit, and the communication function, and
in the restricted activation mode, the injection molding machine is activated in a state in which the whole or a part of detailed function of at least one schematic function among the schematic functions is restricted.

3. The injection molding machine according to claim 2,
wherein, in the restricted activation mode, the injection molding machine is activated in a state in which display of a part of information among the information displayed on the display unit by the display function in a case where the injection molding machine is activated in the usual activation mode or reception of a part of operation inputs among the operation inputs received by the operation function in a case where the injection molding machine is activated in the usual activation mode is restricted.

4. The injection molding machine according to claim 3,
wherein, in the restricted activation mode, the injection molding machine is activated in a state in which information relating to diagnosis or maintenance of the injection molding machine is able to be displayed on the display unit by the display function or an operation input relating to diagnosis or maintenance of the injection molding machine is able to be received by the operation function.

5. The injection molding machine according to claim 1,
wherein, in the restricted activation mode, the injection molding machine is activated in a state in which a state of a processing system corresponding to various functions of the injection molding machine is able to be restored to a past state backed up in advance according to an external operation input.

6. The injection molding machine according to claim 1,
wherein, in the restricted activation mode, the injection molding machine is activated in a state in which programs or parameters corresponding to various functions of the injection molding machine are able to be displayed on a display unit according to an external operation input.

7. The injection molding machine according to claim 1,
wherein, in a case where a predetermined activation operation different from a usual activation operation when the injection molding machine is activated in the usual activation mode is performed, the injection molding machine is activated in the restricted activation mode.

8. The injection molding machine according to claim 1,
wherein, in a case where the injection molding machine is stopped in a state in which a predetermined abnormality is present, the injection molding machine is activated in the restricted activation mode at the time of next activation.

9. The injection molding machine according to claim 1,
wherein, in a case where the injection molding machine is stopped in a state in which a predetermined diagnosis processing operation relating to diagnosis of the injection molding machine or a predetermined maintenance processing operation relating to maintenance of the injection molding machine is uncompleted, when the injection molding machine is subsequently activated in the restricted activation mode, the injection molding machine executes the uncompleted diagnosis processing operation or maintenance processing operation.

## Patentansprüche

1. Spritzgießmaschine, umfassend:
eine Formklemmeinheit, die konfiguriert ist, eine Formeinheit zu klemmen;
eine Einspritzeinheit, die konfiguriert ist, die Formeinheit, die von der Formklemmeinheit geklemmt wird, mit einem Formmaterial zu befüllen; und
eine Auswerfereinheit, die konfiguriert ist, ein Formerzeugnis aus der Formeinheit auszuwerfen, nachdem das von der Einspritzeinheit eingefüllte Formmaterial gekühlt und verfestigt ist,
**dadurch gekennzeichnet, dass** die Spritzgießmaschine konfiguriert ist, in einem normalen Aktivierungsmodus oder in einem eingeschränkten Aktivierungsmodus, bei dem ein Teil von Funktionen in Bezug auf einen Fall, bei dem die Spritzgießmaschine in dem normalen Aktivierungsmodus aktiviert ist, eingeschränkt ist, aktiviert zu werden, und
die Spritzgießmaschine konfiguriert ist, in einem Zustand, in dem eine Diagnosefunktion in Bezug auf Diagnose der Spritzgießmaschine oder eine Wartungsfunktion in Bezug auf Wartung der Spritzgießmaschine oder eine Kommunikationsfunktion mit einem Äußeren der Spritzgießmaschine valide sind, in dem eingeschränkten Aktivierungsmodus aktiviert zu werden.

2. Spritzgießmaschine nach Anspruch 1,
wobei die Spritzgießmaschine schematische Funktionen umfassend eine Anzeigefunktion, um eine Anzeigeeinheit zu veranlassen, Informationen in Bezug auf die Spritzgießmaschine anzuzeigen, eine Bedienfunktion des Entgegennehmens einer externen Bedieneingabe an der Spritzgießmaschine, eine Änderungsfunktion des Änderns einer Einstellung in Bezug auf die Spritzgießmaschine gemäß der Bedieneingabe, eine Steuerungsfunktion des Steuerns einer Antriebseinheit in Bezug auf einen Formvorgang basierend auf der Einstellung in Bezug auf Formbedingungen der Spritzgießmaschine, eine Antriebsfunktion des Aktivierens der Antriebseinheit, und die Kommunikationsfunktion aufweist, und
in dem eingeschränkten Aktivierungsmodus die Spritzgießmaschine in einem Zustand aktiviert wird, bei dem die Gesamtheit oder ein Teil detaillierter Funktion von mindestens einer schematischen Funktion unter den schematischen Funktionen eingeschränkt ist.

3. Spritzgießmaschine nach Anspruch 2,
wobei in dem eingeschränkten Aktivierungsmodus die Spritzgießmaschine in einem Zustand aktiviert wird, in dem Anzeige eines Teils von Informationen unter den Informationen, die durch die Anzeigefunktion auf der Anzeigeeinheit angezeigt werden in einem Fall, bei dem die Spritzgießmaschine in dem normalen Aktivierungsmodus aktiviert ist, oder Entgegennahme eines Teils von Bedieneingaben unter den von der Bedienfunktion entgegengenommenen Bedieneingaben in einem Fall, bei dem die Spritzgießmaschine in dem normalen Aktivierungsmodus aktiviert wird, eingeschränkt ist.

4. Spritzgießmaschine nach Anspruch 3,
wobei in dem eingeschränkten Aktivierungsmodus die Spritzgießmaschine in einem Zustand aktiviert wird, in dem Informationen in Bezug auf Diagnose oder Wartung der Spritzgießmaschine an der Anzeigeeinheit durch die Anzeigefunktion angezeigt werden können oder eine Bedieneingabe in Bezug auf Diagnose oder Wartung der Spritzgießmaschine von der Bedienfunktion entgegengenommen werden kann.

5. Spritzgießmaschine nach Anspruch 1,
wobei in dem eingeschränkten Aktivierungsmodus die Spritzgießmaschine in einem Zustand aktiviert wird, in dem ein Zustand eines Verarbeitungssystems entsprechend verschiedenen Funktionen der Spritzgießmaschine in der Lage ist, in einen früheren Zustand wiederhergestellt zu werden, der vorab gemäß einer externen Bedieneingabe gesichert ist.

6. Spritzgießmaschine nach Anspruch 1,
wobei in dem eingeschränkten Aktivierungsmodus die Spritzgießmaschine in einem Zustand aktiviert wird, in dem Programme oder Parameter entsprechend verschiedenen Funktionen der Spritzgießmaschine in der Lage sind, gemäß einer externen Bedieneingabe an einer Anzeigeeinheit angezeigt zu werden.

7. Spritzgießmaschine nach Anspruch 1,
wobei in einem Fall, in dem ein vorbestimmter Aktivierungsvorgang durchgeführt wird, der sich von einem normalen Aktivierungsvorgang unterscheidet, wenn die Spritzgießmaschine in dem normalen Aktivierungsmodus aktiviert wird, die Spritzgießmaschine in dem eingeschränkten Aktivierungsmodus aktiviert wird.

8. Spritzgießmaschine nach Anspruch 1,
wobei in einem Fall, in dem die Spritzgießmaschine in einem Zustand gestoppt wird, in dem eine vorbestimmte Abnormalität vorhanden ist, die Spritzgießmaschine bei der nächsten Aktivierung in dem eingeschränkten Aktivierungsmodus aktiviert wird.

9. Spritzgießmaschine nach Anspruch 1,
wobei in einem Fall, bei dem die Spritzgießmaschine in einem Zustand gestoppt wird, in dem ein vorbestimmter Diagnoseverarbeitungsvorgang in Bezug auf Diagnose der Spritzgießmaschine oder ein vorbestimmter Wartungsverarbeitungsvorgang in Bezug auf Wartung der Spritzgießmaschine nicht abgeschlossen ist, wenn die Spritzgießmaschine anschließend in dem eingeschränkten Aktivierungsmodus aktiviert wird, die Spritzgießmaschine den nicht abgeschlossenen Diagnoseverarbeitungsvorgang oder Wartungsverarbeitungsvorgang ausführt.

## Revendications

1. Une machine de moulage par injection comprenant :
une unité de serrage de moule configurée pour serrer une unité de moule ;
une unité d'injection configurée pour remplir l'unité de moule, serrée par l'unité de serrage de moule, avec un matériau de moulage ; et
une unité d'éjection configurée pour éjecter un produit de moulage de l'unité de moule après que le matériau de moulage rempli par l'unité d'injection est refroidi et solidifié ;
**caractérisé en ce que** la machine de moulage par injection est configurée pour être activée dans un mode d'activation normal ou dans un mode d'activation restreint où une partie de fonctions est restreinte par rapport à un cas où la machine de moulage par injection est activée dans le mode d'activation normal ; et
la machine de moulage par injection est configurée pour être activée dans le mode d'activation restreint dans un état dans lequel une fonction de diagnostic connexe à un diagnostic de la machine de moulage par injection, ou une fonction de maintenance connexe à une maintenance de la machine de moulage par injection, ou une fonction de communication avec l'extérieur de la machine de moulage par injection, sont valides.

2. La machine de moulage par injection selon la revendication 1,
dans laquelle la machine de moulage par injection présente des fonctions schématiques incluant une fonction d'affichage consistant à amener une unité d'affichage à afficher des informations connexes à la machine de moulage par injection, une fonction d'opération consistant à recevoir une entrée d'opération externe sur la machine de moulage par injection, une fonction de modification consistant à modifier un réglage connexe à la machine de moulage par injection selon l'entrée d'opération, une fonction de commande consistant à commander une unité d'entraînement connexe à une opération de moulage sur la base du réglage connexe à des conditions de moulage de la machine de moulage par injection, une fonction d'entraînement consistant à activer l'unité d'entraînement, et la fonction de communication ; et
dans le mode d'activation restreint, la machine de moulage par injection est activée dans un état dans lequel la totalité ou une partie d'une fonction détaillée d'au moins une fonction schématique parmi les fonctions schématiques est restreinte.

3. La machine de moulage par injection selon la revendication 2,
dans laquelle, dans le mode d'activation restreint, la machine de moulage par injection est activée dans un état dans lequel l'affichage d'une partie des informations parmi les informations affichées sur l'unité d'affichage par la fonction d'affichage dans un cas où la machine de moulage par injection est activée dans le mode d'activation normal, est restreint, ou dans lequel la réception d'une partie des entrées d'opération parmi les entrées d'opération reçues par la fonction d'opération dans un cas où la machine de moulage par injection est activée dans le mode d'activation normal, est restreinte.

4. La machine de moulage par injection selon la revendication 3,
dans laquelle, dans le mode d'activation restreint, la machine de moulage par injection est activée dans un état dans lequel des informations connexes au diagnostic ou à la maintenance de la machine de moulage par injection sont en mesure d'être affichées sur l'unité d'affichage par la fonction d'affichage, ou une entrée d'opération connexe au diagnostic ou à la maintenance de la machine de moulage par injection est en mesure d'être reçue par la fonction d'opération.

5. La machine de moulage par injection selon la revendication 1,
dans laquelle, dans le mode d'activation restreint, la machine de moulage par injection est activée dans un état dans lequel un état d'un système de traitement correspondant à diverses fonctions de la machine de moulage par injection est en mesure d'être restauré à un état antérieur sauvegardé à l'avance selon une entrée d'opération externe.

6. La machine de moulage par injection selon la revendication 1,
dans laquelle, dans le mode d'activation restreint, la machine de moulage par injection est activée dans un état dans lequel des programmes ou des paramètres correspondant à diverses fonctions de la machine de moulage par injection sont en mesure d'être affichés sur une unité d'affichage selon une entrée d'opération externe.

7. La machine de moulage par injection selon la revendication 1,
dans laquelle, dans un cas où une opération d'activation prédéterminée, différente d'une opération d'activation normale où la machine de moulage par injection est activée dans le mode d'activation normal, est mise en œuvre, la machine de moulage par injection est activée dans le mode d'activation restreint.

8. La machine de moulage par injection selon la revendication 1,
dans laquelle, dans un cas où la machine de moulage par injection est arrêtée dans un état dans lequel une anomalie prédéterminée est présente, la machine de moulage par injection est activée dans le mode d'activation restreint au moment de l'activation suivante.

9. La machine de moulage par injection selon la revendication 1,
dans laquelle, dans un cas où la machine de moulage par injection est arrêtée dans un état dans lequel une opération de traitement de diagnostic prédéterminée, connexe au diagnostic de la machine de moulage par injection, ou une opération de traitement de maintenance prédéterminée, connexe à la maintenance de la machine de moulage par injection, n'est pas terminée, lorsque la machine de moulage par injection est subséquemment activée dans le mode d'activation restreint, la machine de moulage par injection exécute l'opération de traitement de diagnostic ou l'opération de traitement de maintenance non terminée.
